# EUROPÄISCHE PATENTANMELDUNG

(11) **EP 1 156 258 A1**
(43) Veröffentlichungstag der Anmeldung: **21.11.2001**
(21) Anmeldenummer: 00125449.9
(22) Anmeldetag: 20.11.2000
(51) Int. Cl.: F16L 33/02

(54) **Federbandschellenblock**

(30) Priorität: 15.05.2000 DE 10023607; 03.07.2000 DE 10031000
(71) Anmelder: Muhr und Bender KG, 57439 Attendorn (DE)
(72) Erfinder: Klör, Stefan, 57462 Olpe (DE); Neukirch, Hans, 57439 Attendorn (DE)
(74) Vertreter: Gesthuysen, von Rohr & Eggert

(57) **Zusammenfassung**

Beschrieben und dargestellt ist ein Federbandschellenblock, bestehend aus einer Mehrheit von Federbandschellen (1), wobei die Federbandschellen (1) jeweils ein Federband (2) und zwei abstehende Spannenden (3, 4) aufweisen.

Der erfindungsgemäße Federbandschellenblock ist dadurch besonders einfach und für alle Arten von Federbandschellen (1) realisierbar, daß die Federbandschellen (1) mittels eines Verbindungsmittels miteinander lösbar verbunden sind. Vorzugsweise sind die Federbandschellen (1) mittels mindestens zweier Klebestreifen (5, 6) untereinander verbunden und sind die Klebestreifen (5, 6) längs zur Achse (7) der Federbandschellen (1) auf dem Federband (2) angeordnet, vorzugsweise in der Nähe der abstehenden Spannenden (3, 4).

## Beschreibung

Die Erfindung betrifft einen Federbandschellenblock, bestehend aus einer Mehrheit von Federbandschellen, wobei die Federbandschellen ein Federband und zwei abstehende Spannenden aufweisen.

Federbandschellen sind seit vielen Jahren und in verschiedenen Ausführungsformen bekannt (vgl. die deutschen Patentschriften DE 36 33 486 C1, DE 38 32 875 C1 und DE 43 05 649 C2). Mit solchen Federbandschellen wird beispielsweise der druckdichte Sitz von Schlauchenden auf den Anschlußstutzen des Kühlwassersystems eines Kraftfahrzeugmotors gewährleistet. Derartige Federbandschellen weisen im entspannten Zustand - Klemmzustand - einen bestimmten Innendurchmesser auf und können mit Hilfe eines an den Spannenden angreifenden Spannwerkzeugs entgegen der eigenen Federkraft des Federbandes auf einen erheblich größeren Durchmesser aufgespreizt werden - Aufspreizzustand, in welchem die Federbandschelle dann einen gegenüber dem Außendurchmesser des Schlauchendes größeren Innendurchmesser aufweist und somit leicht über das auf einen Anschlußstutzen zu stülpende Schlauchende bis an die jeweilige Montagestelle bewegt werden kann. Der druckdichte Sitz eines Schlauchendes auf einem Anschlußstutzen wird einerseits durch die Eigenelastizität des Schlauchendes selbst, andererseits durch die Federkraft der Federbandschelle, d. h. des Federbandes der Federbandschelle, gewährleistet.

Die Federbandschellen, die in unterschiedlichen Größen und Ausführungsformen in großer Anzahl produziert werden und insbesondere in der Automobilindustrie auch in sehr großer Anzahl eingesetzt werden, werden von den Herstellern an die Automobilindustrie in Kartons von beispielsweise 50, 100 oder 500 Stück geliefert. Der Monteur nimmt dann jede einzelne benötigte Federbandschelle aus dem Karton, bringt die Federbandschelle mit einem entsprechenden Montagewerkzeug in den Aufspreizzustand und führt die Federbandschelle so an die jeweilige Montagestelle. Da sich dieser Vorgang im Laufe eines Tages viele hunderte Male wiederholt, ist es wünschenswert, die einzelnen Federbandschellen so zur Verfügung zu stellen, daß der Monteur sie möglichst direkt mit dem entsprechenden Montagewerkzeug greifen kann. Hierzu werden Halterungen hergestellt, auf die eine bestimmte Anzahl von Federbandschellen aufgeschoben werden kann - die Federbandschellen also quasi magaziniert werden können, so daß die Federbandschellen anschließend von dem Monteur direkt mit dem Montagewerkzeug aus einer vordefinierten Position gegriffen werden können. Nachteilig ist dabei zum einen die für das Magazinieren benötigte Zeit, zum anderen, daß für unterschiedliche Federbandschellen, insbesondere für Federbandschellen mit unterschiedlichem Durchmesser, unterschiedliche Halterungen benötigt werden.

Der Erfindung liegt nun die Aufgabe zugrunde, mehrere Federbandschellen derart miteinander in Verbindung zu bringen, d. h. zu magazinieren bzw. in Form eines Federbandschellenblocks bereitzustellen, daß es möglich ist, die einzelnen Federbandschellen in einer für die Montage möglichst günstigen Position zur Verfügung stellen zu können.

Die zuvor hergeleitete und aufgezeigte Aufgabe ist zunächst und im wesentlichen dadurch gelöst, daß die Federbandschellen mittels eines Verbindungsmittels miteinander lösbar verbunden sind.

Durch die erfindungsgemäße Verwendung eines die einzelnen Federbandschellen miteinander lösbar verbindenden Verbindungsmittels wird auf besonders einfache, kostengünstige, aber dennoch effektive Weise eine Magazinierung von Federbandschellen, d. h. ein Federbandschellenblock realisiert, so daß dem Monteur auf einmal eine Vielzahl von Federbandschellen in einer für die Montage möglichst optimalen Position zur Verfügung gestellt werden können.

Im einzelnen gibt es verschiedene Möglichkeiten, bei dem erfindungsgemäßen Federbandschellenblock das Verbindungsmittel zu realisieren.

Bei einer ersten bevorzugten Ausführungsform des erfindungsgemäßen Federbandschellenblocks ist als Verbindungsmittel mindestens ein Klebestreifen vorgesehen. Vorzugsweise sind jedoch zwei Klebestreifen vorgesehen und die Klebestreifen längs zur Achse der Federbandschellen auf dem Federband angeordnet. Dadurch, daß mit Abstand zueinander, vorzugsweise in der Nähe der abstehenden Spannenden, je ein Klebestreifen angeordnet ist, wird auch bei Verwendung von Klebestreifen mit an sich sehr flexiblem Material ein sehr stabiler und verwindungssteifer Federbandschellenblock erreicht. Der erfindungsgemäße Federbandschellenblock ist darüber hinaus unabhängig von der Ausführung und dem Durchmesser der einzelnen Federbandschellen mit minimalem Aufwand realisierbar. Die Stabilität des Federbandschellenblocks ist dann besonders groß, wenn bei zwei verwendeten Klebestreifen diese beiden um etwa 180° versetzt zueinander auf dem Federband angeordnet sind. Eine solche Anordnung der Klebestreifen verhindert ein ungewolltes Auseinanderkippen des Federbandschellenblocks quer zu dessen Längsachse, was dann auftreten würde, wenn nur ein einziger Klebestreifen verwendet würde oder zwei Klebestreifen direkt nebeneinander verwendet würden.

Zur Trennung der einzelnen Federbandschellen von dem Federbandschellenblock, d. h. zur Ablösung der einzelnen Federbandschellen von den Klebestreifen, ist es vorteilhaft, wenn der Klebestreifen bzw. die Klebestreifen auf einer Seite über das Ende des Federbandschellenblocks übersteht bzw. überstehen. Dann kann bzw. können die der Klebestreifen bzw. die Klebestreifen auf einfache Weise durch einen Monteur vom Federbandschellenblock abgezogen werden, nachdem der Federbandschellenblock in eine entsprechende Halterung eingesetzt worden ist. Alternativ oder zusätzlich zur vorgenannten Maßnahme kann der Klebestreifen bzw. können die Klebestreifen im Übergangsbereich zwischen zwei Federbandschellen quer zur Längsrichtung des Klebestreifens perforiert sein. Dadurch ist dann ein Ablösen einer einzelnen Federbandschelle von dem Federbandschellenblock möglich, ohne daß der Klebestreifen bzw. die Klebestreifen insgesamt von dem Federbandschellenblock abgezogen werden muß bzw. müssen . Dies ist dann vorteilhaft, wenn der Federbandschellenblock nicht in eine entsprechende Halterung oder Aufnahme gesetzt wird, welche ein Auseinanderfallen der einzelnen Federbandschellen nach Abziehen der Klebestreifen von dem Federbandschellenblock verhindern soll. Bei Verwendung eines perforierten Klebestreifens bzw. perforierter Klebestreifen können einzelne Federbandschellen von dem Federbandschellenblock gelöst werden, ohne daß die verbleibenden Federbandschellen auseinanderfallen.

Zuvor sind im einzelnen Ausführungsformen erfindungsgemäßer Federbandschellenblocks beschrieben worden, die gemeinsam haben, daß als Verbindungsmittel mindestens ein Klebestreifen vorgesehen ist. Es gibt aber auch verschiedene andere Möglichkeiten, das zu dem erfindungsgemäßen Federbandschellenblock gehörende Verbindungsmittel auszugestalten.

Eine von den zuvor beschriebenen Ausführungsformen grundsätzlich unterschiedliche Ausführungsform eines erfindungsgemäßen Federbandschellenblocks ist dadurch gekennzeichnet, daß als Verbindungsmittel eine die einzelnen Federbandschellen miteinander verbindende Verbindungsklammer vorgesehen ist, die vorzugsweise kammartig ausgeführt sein kann.

Bei einer nochmals anderen Ausführungsform eines erfindungsgemäßen Federbandschellenblocks ist als Verbindungsmittel ein die einzelnen Federbandschellen miteinander verbindender Klebstoff zwischen den einzelnen Federbandschellen vorgesehen.

Im einzelnen gibt es nun eine Vielzahl von Möglichkeiten, den erfindungsgemäßen Federbandschellenblock, insbesondere die genaue Anordnung und Abmessung der Klebestreifen auszugestalten. Mögliche, vorteilhafte Ausgestaltungen der Lehre der Erfindung sind in den auf den Patentanspruch 1 rückbezogenen Patentansprüchen angegeben.

Nachfolgend wird die Erfindung anhand von drei zeichnerisch dargestellten bevorzugten Ausführungsbeispielen erläutert. In der Zeichnung zeigen
- Fig. 1: einen Federbandschellenblock mit zwei Klebestreifen, die auf einer Seite über das Ende des Federbandschellenblocks überstehen,
- Fig. 2: einen Federbandschellenblock mit drei Klebestreifen, wobei die Klebestreifen jeweils quer zur Längsrichtung perforiert sind, und
- Fig. 3: einen Federbandschellenblock, bei dem als Verbindungsmittel eine Verbindungsklammer vorgesehen ist.

Die Figuren zeigen einen Federbandschellenblock, bestehend aus sieben bzw. neun Federbandschellen 1, wobei jede Federbandschelle 1 ein Federband 2 und zwei abstehende Spannenden 3, 4 aufweist. Die einzelnen Federbandschellen 1 sind nun erfindungsgemäß dadurch zu einen Federbandschellenblock zusammengefügt, daß die Federbandschellen 1 mittels eines Verbindungsmittels miteinander lösbar verbunden sind.

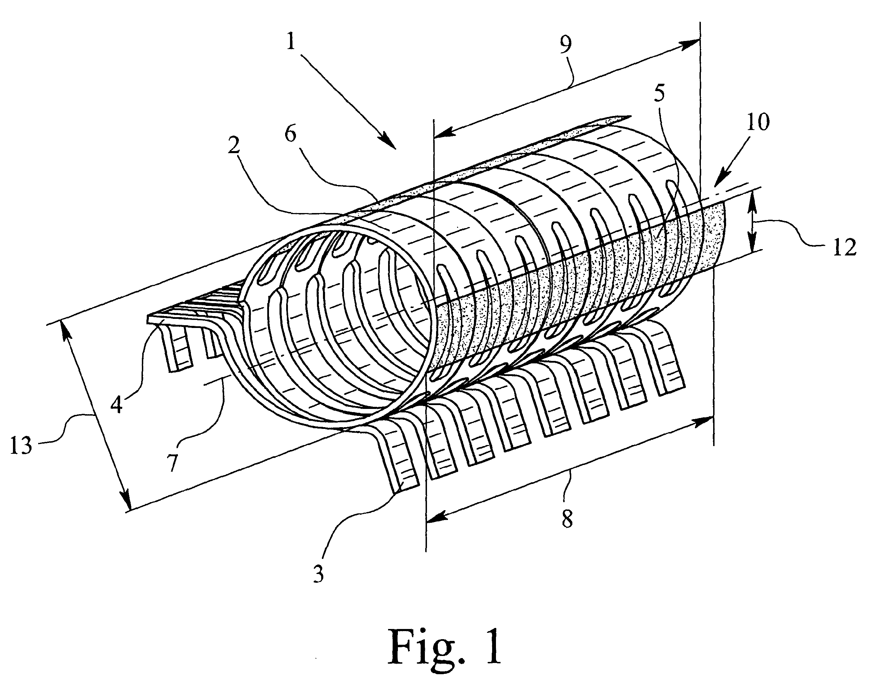

Bei dem Ausführungsbeispiel eines erfindungsgemäßen Federbandschellenblocks, das in Fig. 1 dargestellt ist, sind als Verbindungsmittel zwei Klebestreifen 5, 6 vorgesehen; die Federbandschellen 1 sind also mittels der beiden Klebestreifen 5, 6 untereinander verbunden, wobei die Klebestreifen 5, 6 längs zur Achse 7 der Federbandschellen 1 auf dem Federband 2 in der Nähe der abstehenden Spannenden 3, 4 angeordnet sind. Die beiden Klebestreifen 5, 6 sind um etwas weniger als 180° versetzt zueinander auf dem Federband 2 angeordnet.

Bei dem in Fig. 1 dargestellten Federbandschellenblock ist die Länge 8 der Klebestreifen 5, 6 etwas größer als die Länge 9 des Federbandschellenblocks. Damit stehen die Klebestreifen 5, 6 auf einer Seite 10 des Federbandschellenblocks über dessen Ende hinaus. Hierdurch ist es auf einfache Weise möglich, die Klebestreifen 5, 6 von dem Federbandschellenblock zu lösen. Ist der Federbandschellenblock vorher in eine entsprechende Halterung oder Aufnahme eingesetzt worden, so können die Klebestreifen 5, 6 vor Beginn der Montage der Federbandschellen 1 von allen Federbandschellen 1 abgezogen werden, da durch die Aufnahme oder Halterung ein Auseinanderfallen der Federbandschellen 1 verhindert wird. Wird eine solche Aufnahme oder Halterung nicht verwendet, so kann ein Auseinanderfallen der einzelnen Federbandschellen 1 des Federbandschellenblocks dadurch verhindert werden, daß die Klebestreifen 5, 6 immer nur soweit abgezogen werden, wie es der Länge bzw. Anzahl der gerade benötigten Federbandschellen 1 entspricht.

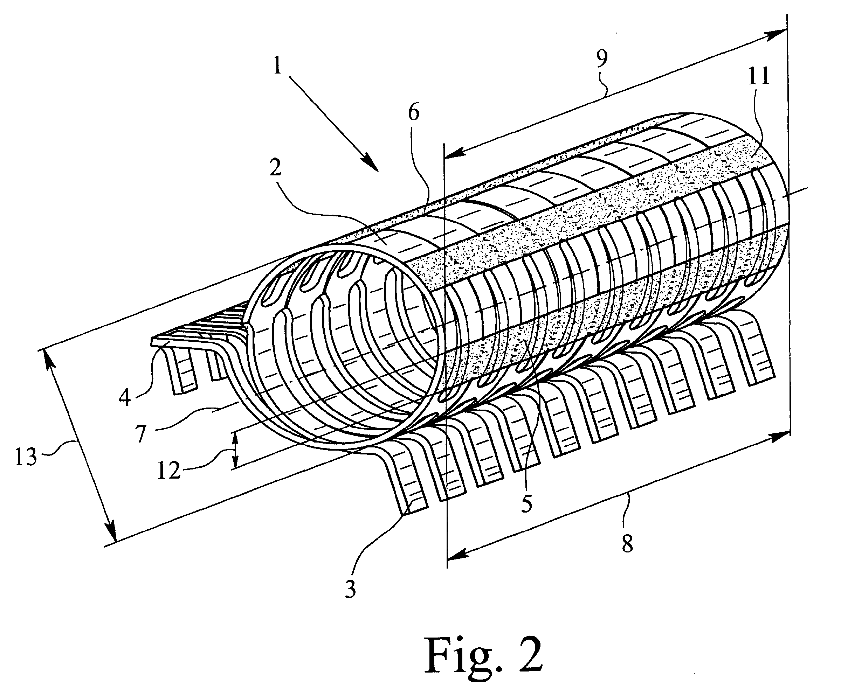

Bei dem in Fig. 2 dargestellten Federbandschellenblock sind zunächst auch zwei Klebestreifen 5, 6 vorgesehen, die um etwas mehr als 180° versetzt zueinander angeordnet sind. Die beiden Klebstreifen 5, 6 sind also bei dem Ausführungsbeispiel nach Fig. 2 etwas weniger weit von den abstehenden Spannenden 3, 4 entfernt als die beiden Klebestreifen 5, 6 bei dem Federbandschellenblock nach Fig. 1.

Im übrigen entspricht zum einen die Länge 8 der Klebestreifen 5, 6 der Länge 9 des Federbandschellenblocks, sind zum anderen die Klebestreifen 5, 6 im Übergangsbereich zwischen zwei Federbandschellen 1 quer zur Längsrichtung der Klebestreifen 5, 6 perforiert. Somit können hier die einzelnen Federbandschellen 1 vom Federbandschellenblock abgetrennt werden, ohne daß die Klebestreifen 5, 6 vorher abgezogen werden müssen. Dazu müssen nur die Klebestreifen 5, 6 an den bereits perforierten Stellen durchtrennt werden.

Darüber hinaus unterscheidet sich der in Fig. 2 dargestellte Federbandschellenblock von dem Federbandschellenblock gemäß Fig. 1 noch dadurch, daß zur zusätzlichen Verstärkung ein dritter Klebestreifen 11 in der Mitte zwischen den beiden spannendennahen Klebestreifen 5, 6 auf dem Federband 2 angeordnet ist. Auch dieser Klebestreifen 11 ist bei dem Ausführungsbeispiel gemäß Fig. 2 perforiert. Selbstverständlich ist es auch möglich, drei nicht perforierte Klebestreifen zu verwenden oder zusätzlich zu zwei perforierten Klebestreifen 5, 6 gemäß Fig. 2 einen nicht perforierten dritten Klebestreifen in der Mitte zwischen den beiden perforierten Klebestreifen 5, 6 anzuordnen. Bei einer solchen Kombination könnte der dritte, mittlere, nicht perforierte Klebestreifen zunächst den Zusammenhalt des Federbandschellenblocks beim Transport und bei der Bereitstellung der Federbandschellen 1 gewährleisten, dann nach dem Bereitstellen des Federbandschellenblocks abgezogen werden und schließlich die für die Montage benötigten Federbandschellen 1 aufgrund der nun nur noch vorhandenen perforierten Klebestreifen 5, 6 durch einfaches Abreißen von dem verbleibenden Federbandschellenblock gelöst werden. Selbstverständlich ist auch jede beliebige andere Kombination von perforierten und nicht perforierten Klebestreifen ebenso wie die Verwendung von mehr als drei Klebestreifen möglich.

Die Breite 12 der Klebestreifen 5, 6, 11 kann je nach Durchmesser der Federbandschellen 1 variiert werden. In der Regel wird die Breite 12 der Klebestreifen 5, 6, 11 zwischen 1/3 und 2/3 des Durchmesser 13 der Federbandschellen 1 betragen. Ebenso kann die Dicke und damit auch die Reißfestigkeit der Klebestreifen 5, 6, 11 je nach Größe und Gewicht der einzelnen Federbandschellen 1 bzw. Länge des Federbandschellenblocks gewählt werden. Für Federbandschellen 1, wie sie üblicherweise in Automobilen eingesetzt werden, kann in der Regel ein handelsübliches Klebeband verwendet werden. Bedarfsweise kann aber auch ein verstärktes Klebeband für die Klebestreifen 5 und 6 bzw. für die Klebestreifen 5, 6 und 11 verwendet werden.

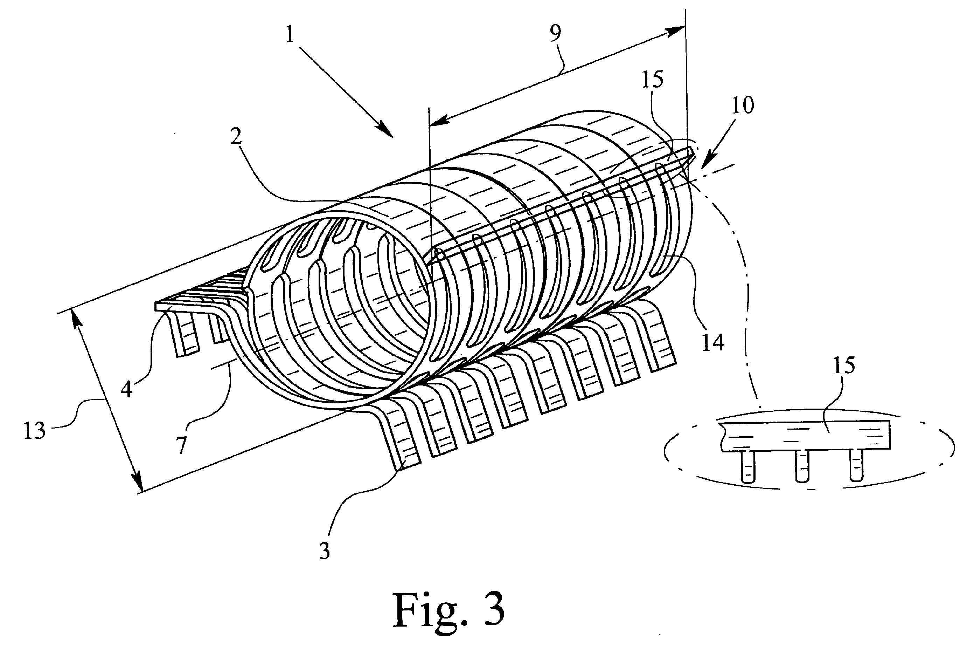

In allen Ausführungsbeispielen weisen die Federbänder 2 der Federbandschellen 1 Ausnehmungen 14 auf, wie dies in Fig. 3 besonders angedeutet ist. Dies ausnutzend, ist das in Fig. 3 dargestellte Ausführungsbeispiel eines erfindungsgemäßen Federbandschellenblocks dadurch gekennzeichnet, daß als Verbindungsmittel eine die einzelnen Federbandschellen 1 miteinander verbindende Verbindungsklammer 15 vorgesehen ist. Die Verbindungsklammer 15 ist, wie dies der herausgezogene Teil in Fig. 3 besonders deutlich macht, kammartig ausgeführt. Damit kann also die Verbindungsklammer 15 in die in den Federbändern 2 der Federbandschellen 1 verwirklichten Ausnehmungen 14 eingreifen und die einzelnen Federbandschellen auf diese Weise miteinander verbinden.

Schließlich sei noch darauf hingewiesen, daß bei dem erfindungsgemäßen Federbandschellenblock als Verbindungsmittel auch ein die einzelnen Federbandschellen miteinander verbindender Klebstoff zwischen den einzelnen Federbandschellen vorgesehen sein kann.

## Patentansprüche

1. Federbandschellenblock, bestehend aus einer Mehrheit von Federbandschellen (1), wobei die Federbandschellen (1) ein Federband (2) und zwei abstehende Spannenden (3, 4) aufweisen, **dadurch gekennzeichnet, daß** die Federbandschellen (1) mittels eines Verbindungsmittels miteinander lösbar verbunden sind.

2. Federbandschellenblock nach Anspruch 1, **dadurch gekennzeichnet, daß** als Verbindungsmittel mindestens ein Klebestreifen (5) vorgesehen ist.

3. Federbandschellenblock nach Anspruch 2, **dadurch gekennzeichnet, daß** als Verbindungsmittel zwei Klebestreifen (5, 6) vorgesehen sind.

4. Federbandschellenblock nach Anspruch 3, die beiden Klebestreifen (5, 6) in der Nähe der abstehenden Spannenden (3, 4) der Federbandschellen (1) angeordnet sind.

5. Federbandschellenblock nach Anspruch 3, **dadurch gekennzeichnet, daß** die Klebestreifen (5, 6) um etwa 180° versetzt zueinander auf dem Federband (2) angeordnet sind.

6. Federbandschellenblock nach einem der Ansprüche 2 bis 5, **dadurch gekennzeichnet, daß** die Länge (8) des Klebestreifens (5) bzw. der Klebestreifen (5, 6) die Länge (9) des Federbandschellenblocks übertrifft.

7. Federbandschellenblock nach Anspruch 6, **dadurch gekennzeichnet, daß** der Klebestreifen (5) bzw. die Klebestreifen (5, 6) auf einer Seite (10) des Federbandschellenblocks über dessen Ende übersteht bzw. überstehen.

8. Federbandschellenblock nach einem der Ansprüche 2 bis 7, **dadurch gekennzeichnet, daß** die Klebestreifen (5, 6) im Übergangsbereich zwischen zwei Federbandschellen (1) quer zur Längsrichtung der Klebestreifen (5, 6) perforiert sind.

9. Federbandschellenblock nach einem der Ansprüche 2 bis 8, **dadurch gekennzeichnet, daß** zur zusätzlichen Verstärkung des Federbandschellenblocks ein dritter Klebestreifen (11) in der Mitte zwischen den beiden vorzugsweise spannendennahen Klebestreifen (5, 6) auf dem Federband (2) angeordnet ist.

10. Federbandschellenblock nach einem der Ansprüche 2 bis 9, **dadurch gekennzeichnet, daß** je nach Durchmesser (13) der Federbandschellen (1) die Breite (12) des Klebestreifens (5) bzw. der Klebestreifen (5, 6) bestimmt ist.

11. Federbandschellenblock nach Anspruch 10, **dadurch gekennzeichnet, daß** die Breite (12) des Klebestreifens (5) bzw. der Klebestreifen (5, 6) zwischen 1/3 und 2/3 des Durchmessers (13) der Federbandschelle (1) beträgt.

12. Federbandschellenblock nach einem der Ansprüche 2 bis 11, **dadurch gekennzeichnet, daß** als Klebestreifen (5, 6) handelsübliches Klebeband verwendet ist.

13. Federbandschellenblock nach einem der Ansprüche 2 bis 11, **dadurch gekennzeichnet, daß** als Klebestreifen ein verstärktes Klebeband verwendet ist.

14. Federbandschellenblock nach Anspruch 1, **dadurch gekennzeichnet, daß** als Verbindungsmittel eine die einzelnen Federbandschellen (1) miteinander verbindende Verbindungsklammer (15) vorgesehen ist.

15. Federbandschellenblock nach Anspruch 14, **dadurch gekennzeichnet, daß** die Verbindungsklammer (15) kammartig ausgeführt ist.

16. Federbandschellenblock nach Anspruch 1, **dadurch gekennzeichnet, daß** als Verbindungsmittel ein die einzelnen Federbandschellen (1) miteinander verbindender Klebstoff zwischen den einzelnen Federbandschellen (1) vorgesehen ist.
